# EUROPEAN PATENT SPECIFICATION

(11) **EP 3 091 185 B1**
(45) Date of publication and mention of the grant of the patent: **30.12.2020**
(21) Application number: 16159276.1
(22) Date of filing: 08.03.2016
(51) Int. Cl.: F01D 5/18, F01D 9/06

(54) **AIRFOIL FOR A GAS TURBINE ENGINE AND CORRESPONDING METHOD OF FORMING AN AIRFOIL FOR A GAS TURBINE ENGINE**
SCHAUFELBLATT FÜR EIN GASTURBINENTRIEBWERK UND ZUGEHÖRIGES VERFAHREN ZUR HERSTELLUNG EINES SCHAUFELBLATTES FÜR EIN GASTURBINENTRIEBWERK
PROFIL D'AUBE POUR UN MOTEUR À TURBINE À GAZ ET PROCÉDÉ ASSOCIÉ DE FABRICATION D'UN PROFIL D'AUBE POUR UN MOTEUR À TURBINE À GAZ

(30) Priority: 08.05.2015 US 201514707875
(43) Date of publication of application: 09.11.2016
(73) Proprietor: United Technologies Corporation, Farmington, CT 06032 (US)
(72) Inventor: SPANGLER, Brandon W., Vernon, CT Connecticut 06066 (US)
(74) Representative: Dehns

(56) References cited:
- EP-A1- 3 059 391
- EP-A1- 3 088 668
- WO-A1-2014/007961

## Description

### FIELD

The present disclosure relates generally to airfoils for gas turbine engine, and more specifically, to an airfoil having an overlapping herringbone filmhole pattern. The present disclosure also relates generally to methods of forming airfoils for gas turbine engine.

### BACKGROUND

In a gas turbine engine, rotor and/or stator airfoils have filmholes in their surfaces to allow cooling air to pass from cavities inside the airfoil and out through the filmholes, cooling the airfoil. Groups of filmholes may point in different directions. However, because the filmholes point in different directions, areas of the airfoil may not receive cooling air. Such areas may be insufficiently cooled and subject to early wear and/or failure.

A prior art airfoil and method of forming the same having the features of the preamble to claims 1 and 10 is disclosed in WO 2014/007961.

### SUMMARY

From one aspect, the present invention provides an airfoil for a gas turbine engine in accordance with claim 1.

From another aspect, the present invention provides a method of forming an airfoil for a gas turbine engine in accordance with claim 10.

Other features of embodiments are disclosed in the dependent claims.

### BRIEF DESCRIPTION OF THE DRAWINGS

The subject matter of the present disclosure is particularly pointed out and distinctly claimed in the concluding portion of the specification. A more complete understanding of the present disclosure, however, is best be obtained by referring to the detailed description and claims when considered in connection with the drawing figures, wherein like numerals denote like elements.
FIG. 1 illustrates a cross-sectional view of an exemplary gas turbine engine, according to various embodiments;
FIG. 2 illustrates example airfoils including a rotor and a stator, according to various embodiments;
FIG. 3A illustrates an example airfoil having an overlapping herringbone filmhole pattern, according to the invention;
FIG. 3B illustrates an example airfoil having an overlapping herringbone filmhole pattern on a leading edge of the example airfoil, according to the invention;
FIG. 3C illustrates an example airfoil having an overlapping herringbone filmhole pattern with a transition region filmhole group proximate to a radially outward facing portion and a radially inward facing portion and overlapping the mesial ends of the first radially outward facing portion and the first radially inward facing portion, which does not fall within the wording of the claims;
FIG. 3D illustrates an example airfoil having an overlapping herringbone filmhole pattern on a leading edge of the example airfoil with a transition region filmhole group proximate to a radially outward facing portion and a radially inward facing portion and overlapping the mesial ends of the first radially outward facing portion and the first radially inward facing portion, according to various embodiments, and an example overlapping herringbone filmhole pattern on a trailing edge of the example airfoil, which does not fall within the wording of the claims;
FIG. 4A illustrates an example airfoil having an overlapping herringbone filmhole pattern according to FIG. 3A, with emphasis on various group alignment lines and transition region radial positions, according to the invention;
FIG. 4B illustrates an example airfoil having an overlapping herringbone filmhole pattern on a leading edge of the example airfoil according to FIG. 3B and with emphasis on various group alignment lines and transition region radial positions, according to the invention;
FIG. 4C illustrates an example airfoil having an overlapping herringbone filmhole pattern according to FIG. 3C, with emphasis on various group alignment lines and transition region radial positions, which does not fall within the wording of the claims; and
FIG. 4D illustrates an example airfoil having an overlapping herringbone filmhole pattern on a leading edge of the example airfoil according to FIG. 3D and with emphasis on various group alignment lines and transition region radial positions, which does not fall within the wording of the claims.

### DETAILED DESCRIPTION

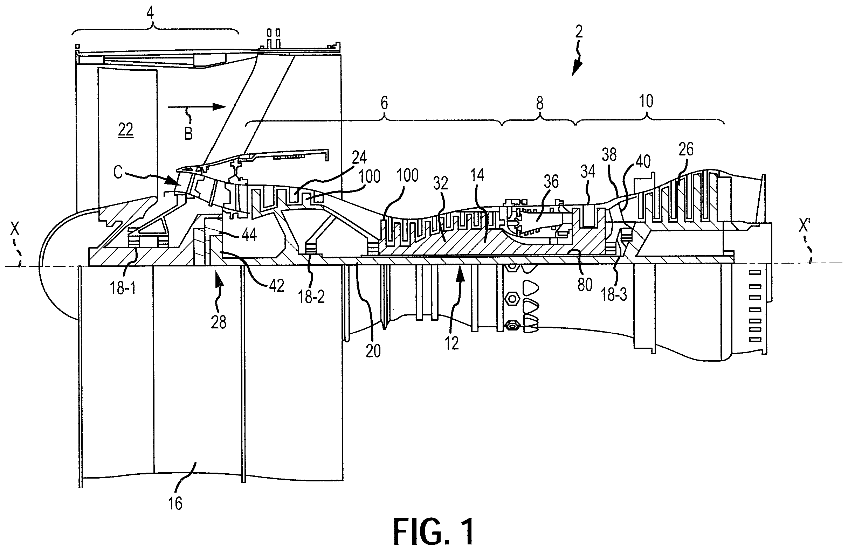

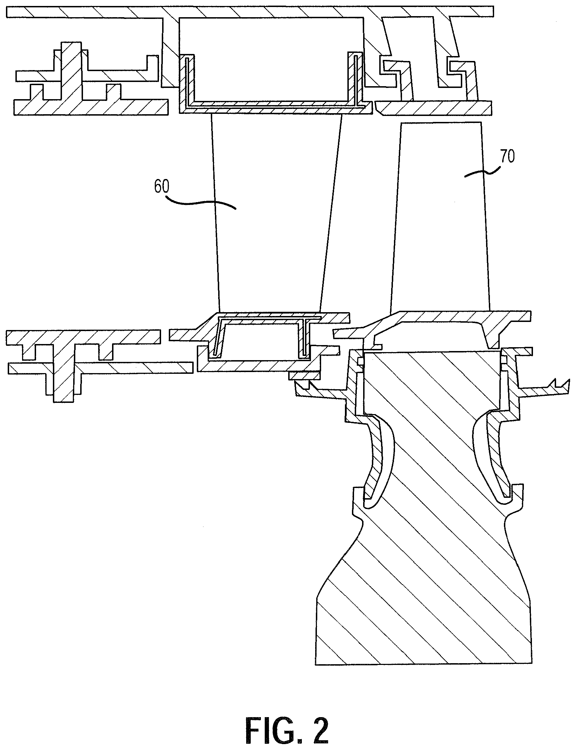

With reference to FIGs. 1 and 2, an exemplary gas turbine engine 2 is provided. Gas turbine engine 2 is a two-spool turbofan that generally incorporates a fan section 4, a compressor section 6, a combustor section 8 and a turbine section 10. Alternative engines include, for example, an augmentor section among other systems or features. In operation, fan section 4 drives air along a bypass flow-path B while compressor section 6 drives air along a core flow-path C for compression and communication into combustor section 8 then expansion through turbine section 10. Although depicted as a turbofan gas turbine engine 2 herein, it should be understood that the concepts described herein are not limited to use with turbofans as the teachings is applicable to other types of turbine engines including three-spool architectures.

Gas turbine engine 2 generally comprises a low speed spool 12 and a high speed spool 14 mounted for rotation about an engine central longitudinal axis X-X' relative to an engine static structure 16 via several bearing systems 18-1, 18-2, and 18-3. It should be understood that bearing systems is alternatively or additionally provided at locations, including for example, bearing system 18-1, bearing system 18-2, and bearing system 18-3.

Low speed spool 12 generally comprises an inner shaft 20 that interconnects a fan 22, a low pressure compressor section 24, e.g., a first compressor section, and a low pressure turbine section 26, e.g., a second turbine section. Inner shaft 20 is connected to fan 22 through a geared architecture 28 that drives the fan 22 at a lower speed than low speed spool 12. Geared architecture 28 comprises a gear assembly 42 enclosed within a gear housing 44. Gear assembly 42 couples the inner shaft 20 to a rotating fan structure. High speed spool 14 comprises an outer shaft 80 that interconnects a high pressure compressor section 32, e.g., second compressor section, and high pressure turbine section 34, e.g., first turbine section. A combustor 36 is located between high pressure compressor section 32 and high pressure turbine section 34. A mid-turbine frame 38 of engine static structure 16 is located generally between high pressure turbine section 34 and low pressure turbine section 26. Mid-turbine frame 38 supports one or more bearing systems 18, such as 18-3, in turbine section 10. Inner shaft 20 and outer shaft 80 is concentric and rotates via bearing systems 18 about the engine central longitudinal axis X-X', which is collinear with their longitudinal axes. As used herein, a "high pressure" compressor or turbine experiences a higher pressure than a corresponding "low pressure" compressor or turbine.

The core airflow C is compressed by low pressure compressor section 24 then high pressure compressor section 32, mixed and burned with fuel in combustor 36, then expanded over high pressure turbine section 34 and low pressure turbine section 26. Mid-turbine frame 38 includes airfoils 40, which are in the core airflow path. Turbines 26, 34 rotationally drive the respective low speed spool 12 and high speed spool 14 in response to the expansion.

Gas turbine engine 2 is, for example, a high-bypass geared aircraft engine. The bypass ratio of gas turbine engine 2 is optionally greater than about six (6). The bypass ratio of gas turbine engine 2 is optionally greater than ten (10). Geared architecture 28 is an epicyclic gear train, such as a star gear system, e.g., sun gear in meshing engagement with a plurality of star gears supported by a carrier and in meshing engagement with a ring gear, or other gear system. Geared architecture 28 has a gear reduction ratio of greater than about 2.3 and low pressure turbine section 26 has a pressure ratio that is greater than about 5. The bypass ratio of gas turbine engine 2 is greater than about ten (10:1). The diameter of fan 22 is significantly larger than that of the low pressure compressor section 24, and the low pressure turbine section 26 has a pressure ratio that is greater than about 5:1. Low pressure turbine section 26 pressure ratio is measured prior to inlet of low pressure turbine section 26 as related to the pressure at the outlet of low pressure turbine section 26 prior to an exhaust nozzle. It should be understood, however, that the above parameters are exemplary of a suitable geared architecture engine and that the present disclosure contemplates other turbine engines including direct drive turbofans.

The next generation of turbofan engines is designed for higher efficiency, which is associated with higher pressure ratios and higher temperatures in the high speed spool 14 and other engine sections. These higher operating temperatures and pressure ratios create operating environments that cause thermal loads that are higher than thermal loads conventionally encountered. Operating conditions in high pressure compressor section 32 are often approximately 760 °C (approximately 1400 °F) or more, and operating conditions in combustor 36 are often higher. Moreover, prior filmhole arrangements permit regions of localized temperature excursions, such as due to regions that are insufficiently cooled due to the orientation of the filmholes. Various systems to address these challenges are presented herein.

Airfoils may have filmholes arranged in rows and each row may have at least one filmhole pointing in a radially outward direction and at least one filmhole pointing in a radially inward direction relative to the engine central longitudinal axis. Various regions of the airfoil, such as the leading edge, rely on the convection in the filmhole to reduce temperature of the airfoil and/or other proximate structures; however, multiple rows of filmholes often transition from groups of filmholes pointing radially outwardly and groups of filmholes pointing radially inwardly at various positions. As such, by intentionally staggering the transition of multiple rows of filmholes from groups pointing radially outward and groups pointing radially inward the effectiveness of the convective cooling proximate to the transitions may be enhanced.

Stated differently, the present disclosure contemplates considering filmhole positioning. For instance, for filmholes arranged in rows ("filmrows"), each filmrow is divided into groups of filmholes. A first group may be oriented to direct cooling air leaving the filmhole generally radially outward relative to the engine central longitudinal axis over a surface of the airfoil, whereas a second group may be oriented to direct cooling air leaving the filmhole generally radially inward relative to the engine central longitudinal axis and over a surface of the airfoil 100. Between the first group and the second group of filmholes in each filmrow, a transition region exists. The transition region is the space between the first group and the second group where the holes transition from pointing outward to pointing inward, resulting in diminished cooling coming from these two groups of filmholes. For instance, the transition region is bounded at one end by filmholes oriented to direct cooling air leaving the filmholes generally radially outward relative to the engine central longitudinal axis over a surface of the airfoil and at the other end by filmholes oriented to direct cooling air leaving the filmholes generally radially inward relative to the engine central longitudinal axis over a surface of the airfoil. Each group of filmholes may define a group alignment line that extends through the center of each filmhole of the group of filmholes.

Thus, according to the invention, one intentionally staggers the second group of filmholes so that first group alignment line of the first group of filmholes does not coincide with the second group alignment line of the second group of filmholes. A filmrow may include a third group of filmholes, the transition region filmhole group. In one embodiment, the transition region filmhole group has a group alignment line that coincides with the group alignment line of one of the first group of filmholes and the second group of filmholes. At least one filmhole of the transition region filmhole group is positioned inward of an orthogonal line to the group alignment line that is not coincident with the group alignment line of the transition region filmhole group, the orthogonal line coinciding with the center of a filmhole along the group alignment line that is not coincident with the group alignment line of the transition region filmhole group In other words, the transition region filmhole group contains holes that radially overlap one of the first and second group of filmholes. The transition region filmhole group may include filmholes that are radially outward of the innermost hole of one of the first and second group of filmholes, and also radially inward of the outermost hole of the other of the first and second group of filmholes. In this manner, the transition region filmhole group may overlap one or both of the first and second group of filmholes.

In further embodiments, which do not fall within the wording of the claims, the second group of filmholes is collinear with the first group of filmholes so that first group alignment line of the first group of filmholes coincides with the second group alignment line of the second group of filmholes. A filmrow may include a third group of filmholes, the transition region filmhole group. The transition region filmhole group has a group alignment line that is staggered relative to the group alignment line of both of the first group of filmholes and the second group of filmholes. At least one filmhole of the transition region filmhole group is positioned inward and at least one filmhole of the transition region filmhole group is positioned outward of a line coincident with the center of a transition region and orthogonal to the group alignment line of the first group of filmholes and/or the second group of filmholes. As such, the transition region filmhole group is proximate to the first group of filmholes and the second group of filmholes and centered about mesial ends of the first group of filmholes and the second group of filmholes, resulting in the transition region filmhole group radially overlapping the first and second filmhole groups. In further embodiments, the transition region filmhole group is overlapping the mesial ends of the first group of filmholes and the second group of filmholes, but is not centered about mesial ends of the first group of filmholes and the second group of filmholes.

According to the invention, staggering of the first group of filmholes and the second group of filmholes of a filmrow and implementation of a transition region filmhole group aligned with one of the first group or second group of filmholes tends to enhance the effectiveness of the cooling proximate to the transition region of the filmrow by permitting the cooling air flowing from the transition region filmhole group to convectively cool the transition region and/or provide additional film to the transition region.

In an embodiment which does not fall within the wording of the claims, aligning of the first group of filmholes and the second group of filmholes, and implementation of a transition region filmhole group staggered relative to the first group or second group of filmholes tends to enhance the effectiveness of the cooling proximate to the transition region of the filmrow by permitting the cooling air flowing from the transition region filmhole group to convectively cool the transition region and/or provide additional film to the transition region.

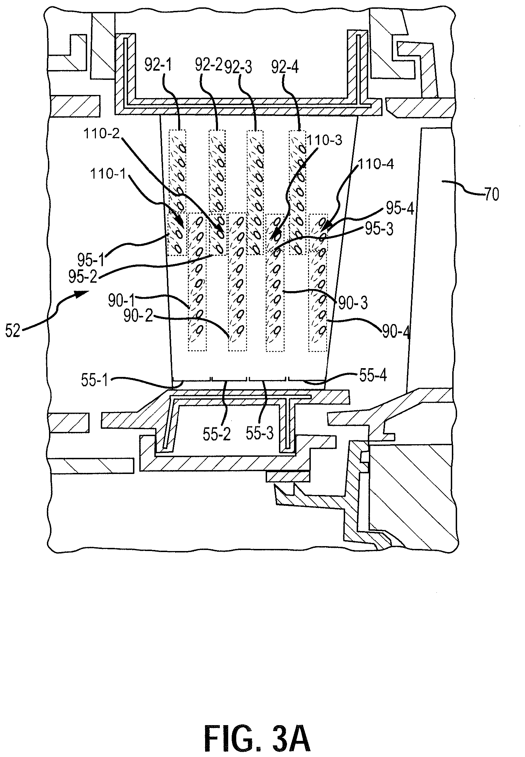

With reference to FIGs. 1 and 2, an airfoil 100 of an engine 2 may comprise a rotor blade 70 or a stator vane 60. While various aspects are described herein with reference to stator vanes 60, such as overlapping herringbone filmhole pattern 52 (with brief reference to FIGs. 3A-4D), such aspects may be incorporated into rotor blades 70 in lieu of or in addition to stator vanes 60, as desired, and may be positioned on the leading edge, pressure side, and/or suction side of the airfoil 100.

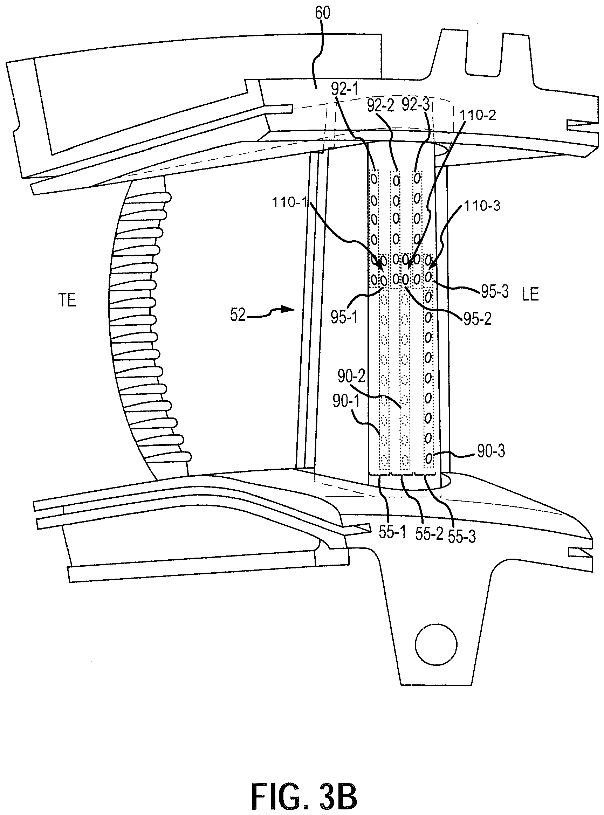

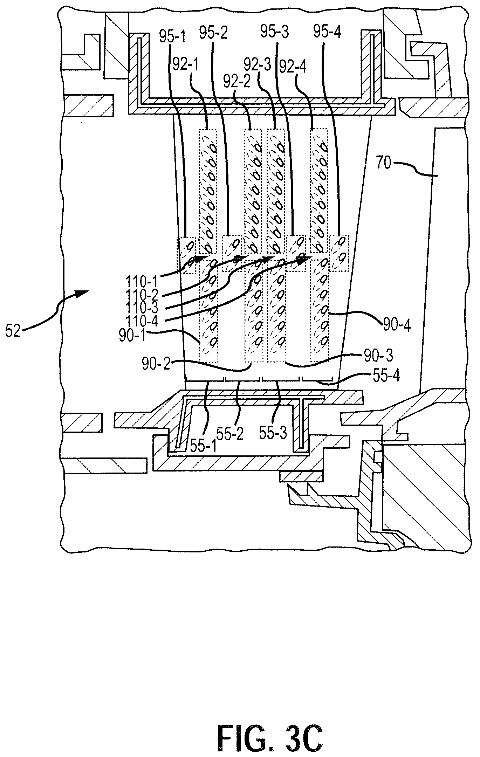

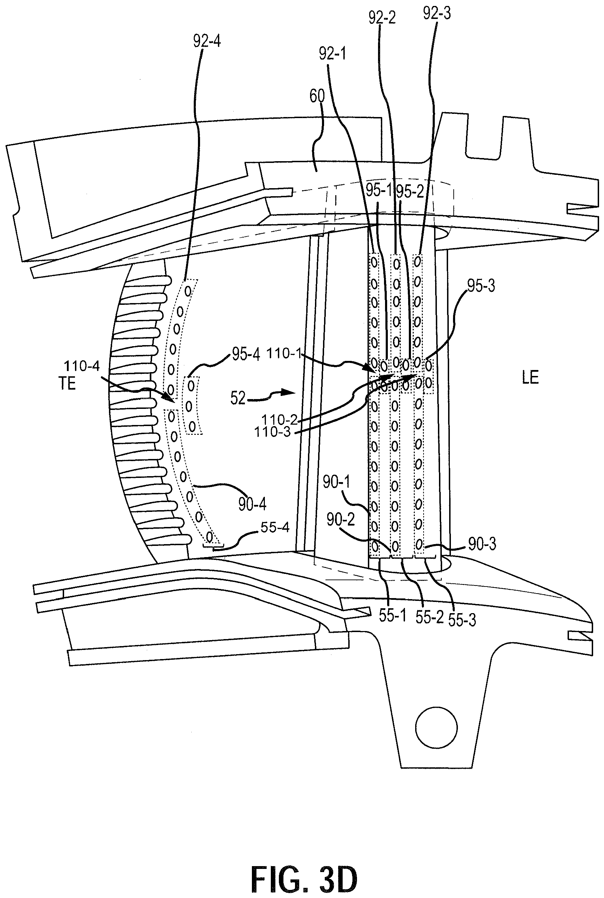

With reference now to FIGs. 2, 3A-4D, an overlapping herringbone filmhole pattern 52 is disclosed. In various embodiments the overlapping herringbone filmhole pattern 52 may comprise an arrangement of filmholes into filmrows 55 configured to cool the airfoil 100. For instance, the overlapping herringbone filmhole pattern 52 may comprise one or more filmrows 55. The overlapping herringbone filmhole pattern 52 may comprise a first filmrow 55-1, a second filmrow 55-2, a third filmrow 55-3, and a fourth filmrow 55-4 (FIG. 3A). While four filmrows are depicted in FIGs. 3A, 3C and three filmrows are depicted in FIGs. 3B, 3D with a fourth filmrow 55-4 disposed near the trailing edge of the airfoil for illustration purposes, one may appreciate that any number of filmrows configured to accomplish a desired cooling on a desired airfoil may be implemented, and any grouping of filmrows may comprise linear arrangements (such as filmrows 55-1, 55-2, and 55-3 of FIG. 3D) and may comprise arcuate or otherwise non-linear arrangements (such as filmrow 55-4 of FIG. 3D).

Each filmrow 55-1, 55-2, 55-3, 55-4 does comprise a radially outward facing portion 90 (e.g., "first group of filmholes") and a radially inward facing portion 92 (e.g., "second group of filmholes"). For instance, the filmholes of each filmrow may be arranged into a row with filmholes oriented to direct cooling air from a channel inside the airfoil through and out of the surface of the airfoil. Relative to the engine central longitudinal axis (e.g., geometric center of a cross-sectional plane of the engine 2 bisecting the stator vane 60), the radially outward facing portion 90 may comprise filmholes oriented to direct cooling air generally radially outward from the engine central longitudinal axis. Similarly, the radially inward facing portion 92 may comprise filmholes oriented to direct cooling air generally radially inward toward the engine central longitudinal axis. Furthermore, each filmrow 55-1, 55-2, 55-3, and 55-4 does further comprise a transition region filmhole group 95 (e.g., "third group of filmholes") made up of filmholes that overlap at least one of the first and second group of holes. The transition region filmhole group 95 may be arranged into a row with filmholes oriented to direct cooling air from a channel inside the airfoil through and out of the surface of the airfoil generally toward the corresponding transition region 110-1, 110-2, 110-3, or 110-4. As used herein, a row may comprise a linear arrangement. In further embodiments, as used herein, a row may comprise an arcuate arrangement, or a compound curve, or any non-linear arrangement as desired.

Because each filmrow 55-1, 55-2, 55-3, 55-4 does comprise a radially outward facing portion 90 and a radially inward facing portion 92 and a transition region filmhole group 95, the first filmrow 55-1 does comprise a first radially outward facing portion 90-1 and a first radially inward facing portion 92-1 and a first transition region filmhole group 95-1, the second filmrow 55-2 does comprise a second radially outward facing portion 90-2 and a second radially inward facing portion 92-2 and a second transition region filmhole group 95-2, the third filmrow 55-3 does comprise a third radially outward facing portion 90-3 and a third radially inward facing portion 92-3 and a third transition region filmhole group 95-3, and the fourth filmrow 55-4 does comprise a fourth radially outward facing portion 90-4 and a fourth radially inward facing portion 92-4 and a fourth transition region filmhole group 95-4.

Each filmrow 55-1, 55-2, 55-2, 55-4 does further comprise a transition region. For example, first filmrow 55-1 does comprise a first transition region 110-1, second filmrow 55-2 may comprise a second transition region 110-2, third filmrow 55-3 does comprise a third transition region 110-3 and fourth filmrow 55-4 does comprise a fourth transition region 110-4. A transition region does either comprise a region at least one of radially equidistant from distal ends and radially centered relative to mesial ends of a radially outward facing portion of a filmrow and a radially inward facing portion of the same filmrow and having the transition region filmhole group of the filmrow disposed therein. Alternatively, a transition region does comprise a region radially overlapping a portion of one or more of the radially outward facing portion and radially inward facing portion of a filmrow and having the transition region filmhole group of the filmrow disposed therein. For instance, first transition region 110-1 is a region at least one of radially equidistant from distal ends and radially centered relative to mesial ends of first radially inward facing portion 92-1 and first radially outward facing portion 90-1 of the first filmrow 55-1 and/or radially overlapping a portion of first radially inward facing portion 92-1 and/or first radially outward facing portion 90-1. Second transition region 110-2 is a region at least one of radially equidistant from distal ends and radially centered relative to mesial ends of second radially inward facing portion 92-2 and second radially outward facing portion 90-2 of the second filmrow 55-2 and/or radially overlapping a portion of second radially inward facing portion 92-2 and/or second radially outward facing portion 90-2. Third transition region 110-3 is a region at least one of radially equidistant from distal ends and radially centered relative to mesial ends of third radially inward facing portion 92-3 and third radially outward facing portion 90-3 of the third filmrow 55-3 and/or radially overlapping a portion of third radially inward facing portion 92-3 and/or third radially outward facing portion 90-3. Fourth transition region 110-4 is a region at least one of radially equidistant from distal ends and radially centered relative to mesial ends of fourth radially inward facing portion 92-4 and fourth radially outward facing portion 90-4 of the fourth filmrow 55-4 and/or radially overlapping a portion of fourth radially inward facing portion 92-4 and/or fourth radially outward facing portion 90-4.

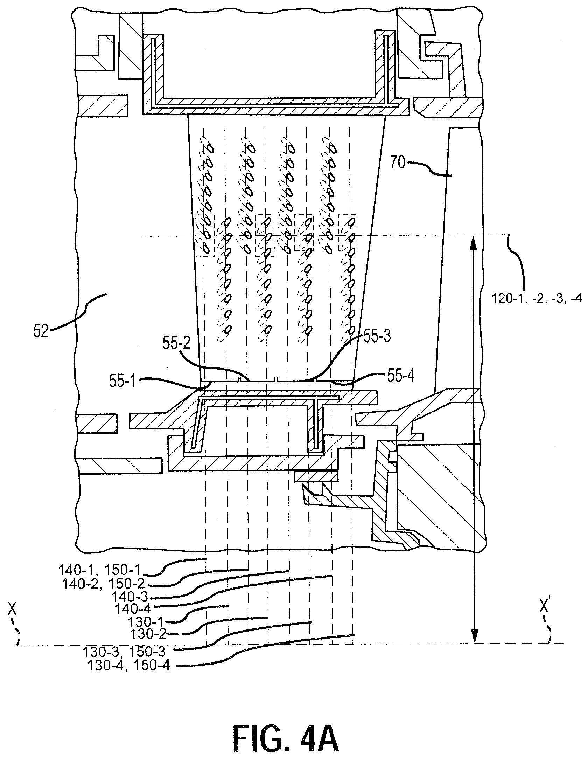

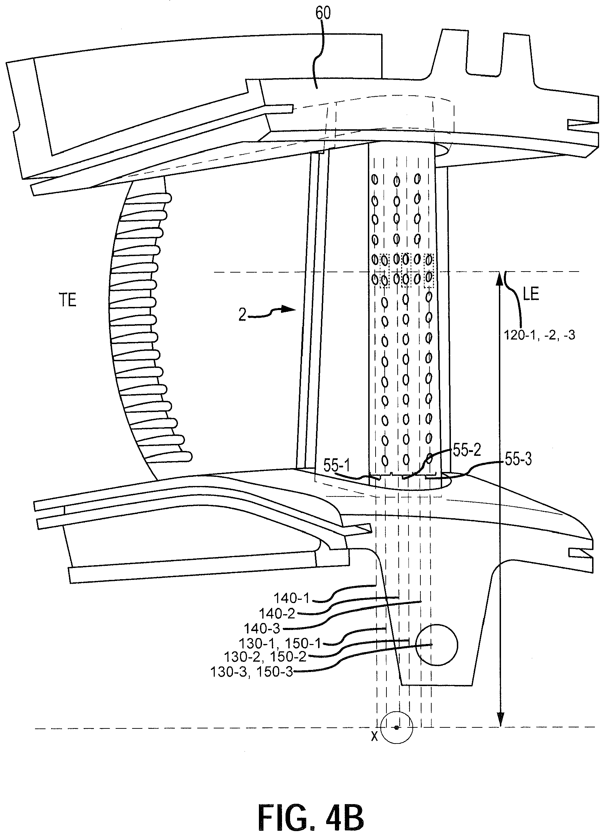

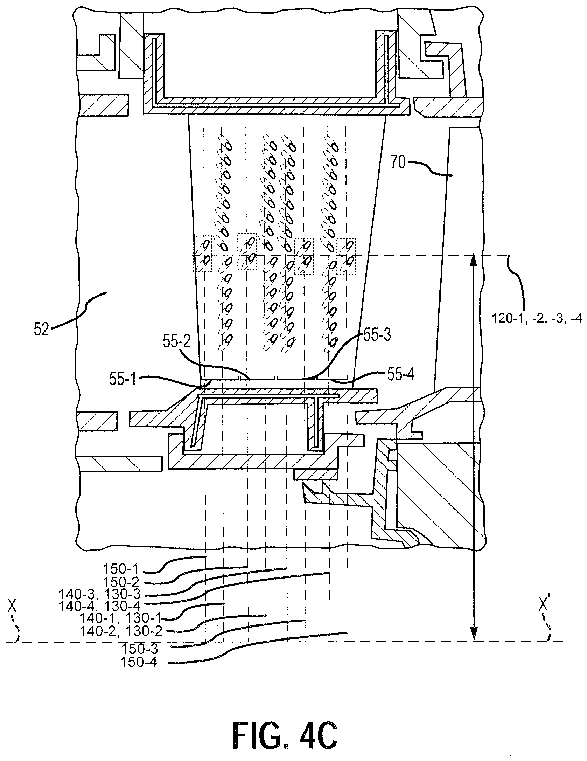

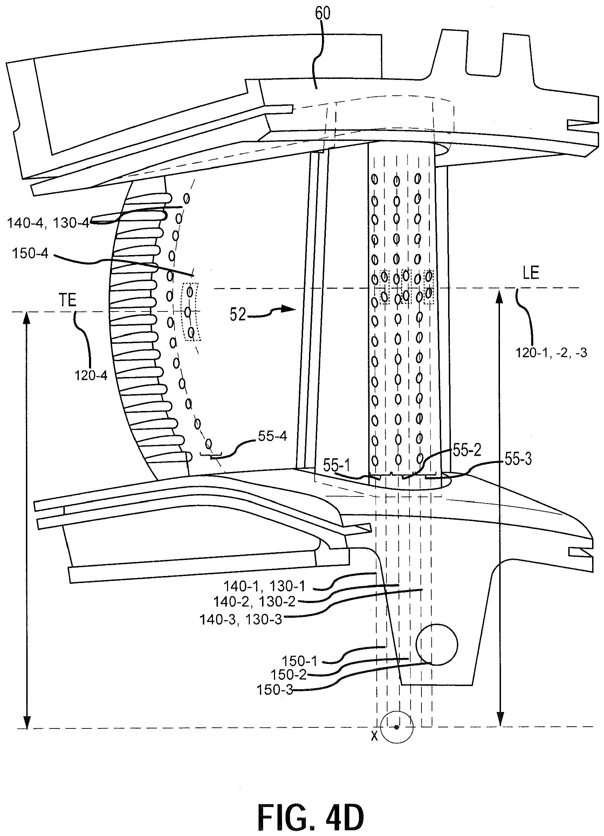

With continued reference to both FIGs. 3A-D and 4A-D, each filmrow may comprise a transition region radial position. For example, first filmrow 55-1 may comprise a first transition region radial position 120-1, second filmrow 55-2 may comprise a second transition region radial position 120-2, third filmrow 55-3 may comprise a third transition region radial position 120-3 and fourth filmrow 55-4 may comprise a fourth transition region radial position 120-4. A transition region radial position may comprise the radial distance of the center of the corresponding transition region from the engine central longitudinal axis. Different transition regions may have different transition region radial positions, or may have the same transition region radial position. In various embodiments, a transition region radial position may comprise an arcuate alignment line, such as may have a point of inflection at the center of the transition region.

With reference to FIGs. 3A-D and 4A-D, each radially outward facing portion 90-1, 90-2, 90-3, 90-4 may have a corresponding radially outward facing portion group alignment line 130-1, 130-2, 130-3, 130-4 that is defined through the center of each filmhole of the radially outward facing portion 90-1, 90-2, 90-3, 90-4. Moreover, each radially inward facing portion 92-1, 92-2, 92-3, 92-4 may have a corresponding radially inward facing portion group alignment line 140-1, 140-2, 140-3, 140-4 that is defined through the center of each filmhole of the radially inward facing portion 92-1, 92-2, 92-3, 92-4. According to the invention, the radially outward facing portion group alignment line 130-1, 130-2, 130-3, 130-4 and the radially inward facing portion group alignment line 140-1, 140-2, 140-3, 140-4 of a filmrow 55-1, 55-2, 55-3, 55-4, does comprise parallel lines extending radially outward relative to the engine central longitudinal axis. On the contrary, according to an example which does not fall within the wording of the claims, said alignment lines may comprise coincident lines extending radially outward relative to the engine central longitudinal axis, or may comprise any orientation as desired. In various embodiments, a group alignment line may comprise an arcuate alignment line, such as may have a point of inflection at the center of the associated radially outward facing portion or radially inward facing portion, or may have a point of inflection outside the associated radially outward facing portion or radially inward facing portion, or may have no point of inflection. Each transition region filmhole group 95-1, 95-2, 95-3, 95-4 may also have a transition region portion group alignment line 150-1, 150-2, 150-3, 150-4 that is defined through the center of each filmhole of the transition region filmhole group 95-1, 95-2, 95-3, 95-4. The transition region portion group alignment line 150-1, 150-2, 150-3, 150-4 may extend generally radially outward relative to the engine central longitudinal axis. The transition region portion group alignment line may comprise a linear line, or an arcuate line, or any orientation as desired. In various embodiments, the transition region portion group alignment line may have a point of inflection at the center of the associated transition region, or may have a point of inflection outside the associated transition region, or may have no point of inflection. The radially outward facing portion 90-1, 90-2, 90-3, 90-4 may be offset relative to the corresponding radially inward facing portion 92-1, 92-2, 92-3, 92-4 of the same filmrow 55-1, 55-2, 55-3, 55-4. In such embodiments, the transition region portion group alignment line 150-1, 150-2, 150-3, 150-4 does coincide with one, but not both, of the radially inward facing portion group alignment line 140-1, 140-2, 140-3, 140-4 and radially outward facing portion group alignment line 130-1, 130-2, 130-3, 130-4. In this manner, each transition region filmhole group 95-1, 95-2, 95-3, and 95-4 of a filmrow 55-1, 55-2, 55-3, 55-4 may comprise filmholes disposed radially outward of the radially innermost filmhole of one of the corresponding radially inward facing portion 92-1, 92-2, 92-3, 92-4 or may comprise filmholes disposed radially inward of the radially outermost filmhole of the radially outward facing portion 90-1, 90-2, 90-3, 90-4 of each filmrow 55-1, 55-2, 55-3, 55-4, resulting in the transition region filmholes radially overlapping at least one of the first and second group of holes.

In further embodiments, which do not fall within the wording of the claims, the radially outward facing portion 90-1, 90-2, 90-3, 90-4 is collinear relative to the corresponding radially inward facing portion 92-1, 92-2, 92-3, 92-4 of the same filmrow 55-1, 55-2, 55-3, 55-4. In such embodiments, the transition region portion group alignment line 150-1, 150-2, 150-3, 150-4 may be offset relative to both of the radially inward facing portion group alignment line 140-1, 140-2, 140-3, 140-4 and radially outward facing portion group alignment line 130-1, 130-2, 130-3, 130-4. In this manner, each transition region filmhole group 95-1, 95-2, 95-3, and 95-4 of a filmrow 55-1, 55-2, 55-3, 55-4 may comprise filmholes disposed overlapping the mesial ends of the corresponding radially inward facing portion 92-1, 92-2, 92-3, 92-4 and the radially outward facing portion 90-1, 90-2, 90-3, 90-4 of each filmrow 55-1, 55-2, 55-3, 55-4, resulting in the transition region filmholes radially overlapping both the first and second group of holes.

In various embodiments, each radially outward facing portion 90-1, 90-2, 90-3, 90-4, is disposed radially inward of each corresponding radially inward facing portion 92-1, 92-2, 92-3, 92-4. However, in various embodiments, each radially outward facing portion may be disposed radially outward of each corresponding radially inward facing portion. In various embodiments, the radially outward facing portion may be disposed radially outward of a corresponding radially inward facing portion of one adjacent filmrow, and radially inward of another adjacent filmrow. Each transition region filmhole group 95-1, 95-2, 95-3, and 95-4 may be disposed in the transition region 110-1, 110-2, 110-3, 110-4 of the corresponding filmrow. Thus, various arrangements are contemplated as desired to facilitate substantially adequate convective and film cooling of the airfoil.

With reference to FIGs. 1-4D, having discussed aspects of an airfoil 100 such as a stator vane 60 and a rotor blade 70, an airfoil 100 may be made of various materials. For instance, an airfoil 100 may be made of a single material, or different materials, or combinations of materials. For example, components of the system are made from metal. For example, aspects of an airfoil 100 are metal, such as nickel, cobalt, molybdenum, titanium, aluminum, steel, or stainless steel, though it alternatively comprises numerous other materials configured to provide support. Components of the system are optionally made from other materials such as, for example, composite, ceramic, plastics, polymers, alloys, glass, binder, epoxy, polyester, acrylic, or any material or combination of materials having desired material properties, such as heat tolerance, strength, stiffness, or weight. Portions of an airfoil 100 as disclosed herein are optionally made of different materials or combinations of materials, and/or comprise coatings. Moreover, components of the airfoil 100 are in some instances mixtures of different materials according to different ratios, gradients, and the like.

An airfoil 100 thus has multiple materials, or any material configuration suitable to enhance or reinforce the resiliency and/or support of the system when subjected to wear in an aircraft operating environment or to satisfy other desired electromagnetic, chemical, physical, or material properties, for example coefficient of thermal expansion, ductility, weight, flexibility, strength, or heat tolerance.

One such material is an austenitic nickel-chromium-based alloy such as Inconel®, which is available from Special Metals Corporation of New Hartford, New York, USA. Other such material includes ceramic matrix composite (CMC). Further material includes refractory metal, for example, an alloy of titanium, such as, titanium-zirconium-molybdenum (TZM).

## Claims

1. An airfoil (100) for a gas turbine engine comprising an overlapping herringbone filmhole pattern (52), wherein the overlapping herringbone filmhole pattern (52) comprises a first filmrow (55-1) comprising:
a first radially outward facing portion (90-1) comprising filmholes oriented to direct cooling air leaving the filmholes radially outward of an engine central longitudinal axis (X-X') and over a surface of the airfoil (100);
a first radially inward facing portion (92-1) comprising filmholes oriented to direct cooling air leaving the filmholes radially inward toward the engine central longitudinal axis (X-X') and over the surface of the airfoil (100);
a first transition region (110-1) comprising a first region at least one of equidistant from distal ends, centered relative to mesial ends, or radially overlapping the mesial ends of the first radially outward facing portion (90-1) and the first radially inward facing portion (92-1); and
a first transition region filmhole group (95-1) located in the first transition region (110-1), wherein the first transition region filmhole group (95-1) comprises filmholes oriented to direct cooling air leaving the filmholes at least one of radially outward or radially inward relative to the engine central longitudinal axis (X-X') and over the surface of the airfoil (100); and **characterised in that**
the first radially outward facing portion (90-1) is staggered relative to the first radially inward facing portion (92-1).

2. The airfoil according to claim 1, wherein the first transition region filmhole group (95-1) is collinear with the first radially outward facing portion (90-1).

3. The airfoil according to claim 1, wherein the first transition region filmhole group (95-1) is collinear with the first radially inward facing portion (92-1).

4. The airfoil according to claim 1, wherein the first transition region (110-1) comprises the first region equidistant from distal ends of the first radially outward facing portion (90-1) and the first radially inward facing portion (92-1); and
the first transition region filmhole group (95-1) is collinear with either the first radially outward facing portion (90-1) or the first radially inward facing portion (92-1) and located in the first transition region (110), wherein the first transition region filmhole group (95-1) comprises filmholes oriented to direct cooling air leaving the filmholes one of radially outward or radially inward relative to the engine central longitudinal axis (X-X') and over the surface of the airfoil (100).

5. The airfoil according to any preceding claim,
wherein a first radially outward facing portion group alignment line (130-1) is defined through a center of each filmhole of the first radially outward facing portion (90-1),
wherein a first radially inward facing portion group alignment line (140-1) is defined through a center of each filmhole of the first radially inward facing portion (92-1),
wherein a first transition region filmhole group alignment line (150-1) is defined through a center of each filmhole of the first transition region filmhole group (95-1),
wherein the first radially inward facing portion group alignment line (140-1) is parallel to the first radially outward facing portion group alignment line (130-1), and
wherein the first transition region filmhole group alignment line (150-1) is coincident with the first radially inward facing portion group alignment line (140-1) and is parallel to the first radially outward facing portion group alignment line (130-1).

6. The airfoil according to any of claims 1 to 4,
wherein a first radially outward facing portion group alignment line (130-1) is defined through a center of each filmhole of the first radially outward facing portion (90-1),
wherein a first radially inward facing portion group alignment line (140-1) is defined through a center of each filmhole of the first radially inward facing portion (92-1),
wherein a first transition region filmhole group alignment line (150-1) is defined through a center of each filmhole of the first transition region filmhole group (95-1),
wherein the first radially inward facing portion group alignment line (140-1) is parallel to the first radially outward facing portion group alignment line (130-1), and
wherein the first transition region filmhole group alignment line (150-1) is coincident with the first radially outward facing portion group alignment line (130-1) and is parallel to the first radially inward facing portion group alignment line (140-1).

7. The airfoil according to any preceding claim, wherein the airfoil (100) comprises a stator vane (60).

8. The airfoil according to any of claims 1 to 6, wherein the airfoil (100) comprises a rotor blade (70).

9. The airfoil of any preceding claim, wherein the overlapping herringbone filmhole pattern (52) comprises a plurality of filmrows (55).

10. A method of forming an airfoil (100) for a gas turbine engine having an overlapping herringbone filmhole pattern (52) in the airfoil (100) comprising:
forming a first radially outward facing portion (90-1) comprising filmholes oriented to direct cooling air leaving the filmholes radially outward of an engine central longitudinal axis (X-X') and over a surface of the airfoil (100);
forming a first radially inward facing portion (92-1) comprising filmholes oriented to direct cooling air leaving the filmholes radially inward toward the engine central longitudinal axis (X-X') and over the surface of the airfoil (100); and
forming a first transition region filmhole group (95-1) located in a first transition region (110-1), wherein the first transition region filmhole group (95-1) comprises filmholes oriented to direct cooling air leaving the filmholes at least one of radially outward or radially inward relative to the engine central longitudinal axis (X-X') and over the surface of the airfoil (100); and **characterised in that**
the first radially outward facing portion (90-1) is staggered relative to the first radially inward facing portion (92-1).

11. The method according to claim 10,
wherein the first transition region filmhole group (95-1) is collinear with either the first radially outward facing portion (90-1) or the first radially inward facing portion (92-1), and
wherein the first transition region (110-1) comprises a first region at least one of equidistant from distal ends, centered relative to mesial ends, or radially overlapping the mesial ends of the first radially outward facing portion (90-1) and the first radially inward facing portion (92-1).

12. The method according to claim 10, wherein the first transition region filmhole group (95-1) is collinear with either the first radially outward facing portion (90-1) or the first radially inward facing portion (92-1).

13. The method according to claim 10, 11 or 12,
wherein a first radially outward facing portion group alignment line (130-1) is defined through a center of each filmhole of the first radially outward facing portion (90-1),
wherein a first radially inward facing portion group alignment line (140-1) is defined through a center of each filmhole of the first radially inward facing portion (92-1),
wherein a first transition region filmhole group alignment line (150-1) is defined through a center of each filmhole of the first transition region filmhole group (95-1),
wherein the first radially inward facing portion group alignment line (140-1) is parallel to the first radially outward facing portion group alignment line (130-1), and
wherein the first transition region filmhole group alignment line (150-1) is coincident with the first radially inward facing portion group alignment line (140-1) and is parallel to the first radially outward facing portion group alignment line (130-1).

14. The method according to claim 10, 11 or 12,
wherein a first radially outward facing portion group alignment line (130-1) is defined through a center of each filmhole of the first radially outward facing portion (90-1),
wherein a first radially inward facing portion group alignment line (140-1) is defined through a center of each filmhole of the first radially inward facing portion (92-1),
wherein a first transition region filmhole group alignment line (150-1) is defined through a center of each filmhole of the first transition region filmhole group (95-1),
wherein the first radially inward facing portion group alignment line (140-1) is parallel to the first radially outward facing portion group alignment line (130-1), and
wherein the first transition region filmhole group alignment line (150-1) is coincident with the first radially outward facing portion group alignment line (130-1) and is parallel to the first radially inward facing portion group alignment line (140-1).

## Patentansprüche

1. Schaufelprofil (100) für ein Gasturbinentriebwerk, umfassend ein überlappendes Fischgräten-Filmlochmuster (52), wobei das überlappende Fischgräten-Filmlochmuster (52) eine erste Filmreihe (55-1) umfasst, die Folgendes umfasst:
einen ersten radial nach außen gerichteten Abschnitt (90-1), der Filmlöcher umfasst, die ausgerichtet sind, um Kühlluft, die aus den Filmlöchern austritt, radial nach außen von einer Mittellängsachse (X-X') des Triebwerks und über eine Fläche des Schaufelprofils (100) zu leiten;
einen ersten radial nach innen gerichteten Abschnitt (92-1), der Filmlöcher umfasst, die ausgerichtet sind, um Kühlluft, die aus den Filmlöchern austritt, radial nach innen in Richtung der Mittellängsachse (X-X') des Triebwerks und über die Fläche des Schaufelprofils (100) zu leiten;
eine erste Übergangsregion (110-1), die eine erste Region von mindestens einem von gleich weit von distalen Enden entfernt, zentriert in Bezug auf mesiale Enden oder die mesialen Enden des ersten radial nach außen gerichteten Abschnitts (90-1) und des ersten radial nach innen gerichteten Abschnitts (92-1) radial überlappend umfasst; und
eine Filmlochgruppe (95-1) der ersten Übergangsregion, die sich in der ersten Übergangsregion (110-1) befindet, wobei die Filmlochgruppe (95-1) der ersten Übergangsregion Filmlöcher umfasst, die ausgerichtet sind, um Kühlluft, die aus den Filmlöchern austritt, mindestens eines von radial nach außen oder radial nach innen in Bezug auf die Mittellängsachse (X-X') des Triebwerks und über die Fläche des Schaufelprofils (100) zu leiten; und **dadurch gekennzeichnet, dass**
der erste radial nach außen gerichtete Abschnitt (90-1) in Bezug auf den ersten radial nach innen gerichteten Abschnitt (92-1) gestapelt ist.

2. Schaufelprofil nach Anspruch 1, wobei die Filmlochgruppe (95-1) der ersten Übergangsregion kollinear zu dem ersten radial nach außen gerichteten Abschnitt (90-1) ist.

3. Schaufelprofil nach Anspruch 1, wobei die Filmlochgruppe (95-1) der ersten Übergangsregion kollinear zu dem ersten radial nach innen gerichteten Abschnitt (92-1) ist.

4. Schaufelprofil nach Anspruch 1, wobei die erste Übergangsregion (110-1) die erste Region umfasst, die gleich weit entfernt ist von distalen Enden des ersten radial nach außen gerichteten Abschnitts (90-1) und des ersten radial nach innen gerichteten Abschnitts (92-1); und
die Filmlochgruppe (95-1) der ersten Übergangsregion zu entweder dem ersten radial nach außen gerichteten Abschnitt (90-1) oder dem ersten radial nach innen gerichteten Abschnitt (92-1) kollinear ist und sich in der ersten Übergangsregion (110) befindet, wobei die Filmlochgruppe (95-1) der ersten Übergangsregion Filmlöcher umfasst, die ausgerichtet sind, um Kühlluft, die eines von radial nach außen oder radial nach innen in Bezug auf die Mittellängsachse (X-X') des Triebwerks und über die Fläche des Schaufelprofils (100) aus den Filmlöchern austritt, zu leiten.

5. Schaufelprofil nach einem der vorhergehenden Ansprüche,
wobei eine Gruppenausrichtungslinie (130-1) des ersten radial nach außen gerichteten Abschnitts durch eine Mitte jedes Filmlochs des ersten radial nach außen gerichteten Abschnitts (90-1) definiert ist,
wobei eine Gruppenausrichtungslinie (140-1) des ersten radial nach innen gerichteten Abschnitts durch eine Mitte jedes Filmlochs des ersten radial nach innen gerichteten Abschnitts (92-1) definiert ist,
wobei eine Filmlochgruppenausrichtungslinie (150-1) der ersten Übergangsregion durch eine Mitte jedes Filmlochs der Filmlochgruppe (95-1) der ersten Übergangsregion definiert ist,
wobei die Gruppenausrichtungslinie (140-1) des ersten radial nach innen gerichteten Abschnitts parallel zur Gruppenausrichtungslinie (130-1) des ersten radial nach außen gerichteten Abschnitts liegt, und
wobei die Filmlochgruppenausrichtungslinie (150-1) der ersten Übergangsregion mit der Gruppenausrichtungslinie (140-1) des ersten radial nach innen gerichteten Abschnitts zusammenfällt und parallel zur Gruppenausrichtungslinie (130-1) des ersten radial nach außen gerichteten Abschnitts liegt.

6. Schaufelprofil nach einem der Ansprüche 1 bis 4,
wobei eine Gruppenausrichtungslinie (130-1) des ersten radial nach außen gerichteten Abschnitts durch eine Mitte jedes Filmlochs des ersten radial nach außen gerichteten Abschnitts (90-1) definiert ist,
wobei eine Gruppenausrichtungslinie (140-1) des ersten radial nach innen gerichteten Abschnitts durch eine Mitte jedes Filmlochs des ersten radial nach innen gerichteten Abschnitts (92-1) definiert ist,
wobei eine Filmlochgruppenausrichtungslinie (150-1) der ersten Übergangsregion durch eine Mitte jedes Filmlochs der Filmlochgruppe (95-1) der ersten Übergangsregion definiert ist,
wobei die Gruppenausrichtungslinie (140-1) des ersten radial nach innen gerichteten Abschnitts parallel zur Gruppenausrichtungslinie (130-1) des ersten radial nach außen gerichteten Abschnitts liegt, und
wobei die Filmlochgruppenausrichtungslinie (150-1) der ersten Übergangsregion mit der Gruppenausrichtungslinie (130-1) des ersten radial nach außen gerichteten Abschnitts zusammenfällt und parallel zur Gruppenausrichtungslinie (140-1) des ersten radial nach innen gerichteten Abschnitts liegt.

7. Schaufelprofil nach einem der vorhergehenden Ansprüche, wobei das Schaufelprofil (100) eine Leitschaufel (60) umfasst.

8. Schaufelprofil nach einem der Ansprüche 1 bis 6, wobei das Schaufelprofil (100) eine Laufschaufel (70) umfasst.

9. Schaufelprofil nach einem der vorhergehenden Ansprüche, wobei das überlappende Fischgräten-Filmlochmuster (52) eine Vielzahl von Filmreihen (55) umfasst.

10. Verfahren zum Ausbilden eines Schaufelprofils (100) für ein Gasturbinentriebwerk, das ein überlappendes Fischgräten-Filmlochmuster (52) in dem Schaufelprofil (100) aufweist, das Folgendes umfasst:
Ausbilden eines ersten radial nach außen gerichteten Abschnitts (90-1), der Filmlöcher umfasst, die ausgerichtet sind, um Kühlluft, die aus den Filmlöchern austritt, radial nach außen von einer Mittellängsachse (X-X') des Triebwerks und über eine Fläche des Schaufelprofils (100) zu leiten;
Ausbilden eines ersten nach innen gerichteten Abschnitts (92-1), der Filmlöcher umfasst, die ausgerichtet sind, um Kühlluft, die aus den Filmlöchern austritt, radial nach innen in Richtung der Mittellängsachse (X-X') des Triebwerks und über die Fläche des Schaufelprofils (100) zu leiten; und
Ausbilden einer Filmlochgruppe (95-1) der ersten Übergangsregion, die sich in einer ersten Übergangsregion (110-1) befindet, wobei die Filmlochgruppe (95-1) der ersten Übergangsregion Filmlöcher umfasst, die ausgerichtet sind, um Kühlluft, die aus den Filmlöchern austritt, mindestens eines von radial nach außen oder radial nach innen in Bezug auf die Mittellängsachse (X-X') des Triebwerks und über die Fläche des Schaufelprofils (100) zu leiten; und **dadurch gekennzeichnet, dass**
der erste radial nach außen gerichtete Abschnitt (90-1) in Bezug auf den ersten radial nach innen gerichteten Abschnitt (92-1) gestapelt ist.

11. Verfahren nach Anspruch 10,
wobei die Filmlochgruppe (95-1) der ersten Übergangsregion entweder zu dem ersten radial nach außen gerichteten Abschnitt (90-1) oder dem ersten radial nach innen gerichteten Abschnitt (92-1) kollinear ist, und
wobei die erste Übergangsregion (110-1) eine erste Region von mindestens einem von gleich weit von distalen Enden entfernt, zentriert in Bezug auf mesiale Enden oder die mesialen Enden des ersten radial nach außen gerichteten Abschnitts (90-1) und des ersten radial nach innen gerichteten Abschnitts (92-1) radial überlappend umfasst.

12. Verfahren nach Anspruch 10, wobei die Filmlochgruppe (95-1) der ersten Übergangsregion entweder mit dem ersten radial nach außen gerichteten Abschnitt (90-1) oder dem ersten radial nach innen gerichteten Abschnitt (92-1) kollinear ist.

13. Verfahren nach Anspruch 10, 11 oder 12,
wobei eine Gruppenausrichtungslinie (130-1) des ersten radial nach außen gerichteten Abschnitts durch eine Mitte jedes Filmlochs des ersten radial nach außen gerichteten Abschnitts (90-1) definiert ist,
wobei eine Gruppenausrichtungslinie (140-1) des ersten radial nach innen gerichteten Abschnitts durch eine Mitte jedes Filmlochs des ersten radial nach innen gerichteten Abschnitts (92-1) definiert ist,
wobei eine Filmlochgruppenausrichtungslinie (150-1) der ersten Übergangsregion durch eine Mitte jedes Filmlochs der Filmlochgruppe (95-1) der ersten Übergangsregion definiert ist,
wobei die Gruppenausrichtungslinie (140-1) des ersten radial nach innen gerichteten Abschnitts parallel zur Gruppenausrichtungslinie (130-1) des ersten radial nach außen gerichteten Abschnitts liegt, und
wobei die Filmlochgruppenausrichtungslinie (150-1) der ersten Übergangsregion mit der Gruppenausrichtungslinie (140-1) des ersten radial nach innen gerichteten Abschnitts zusammenfällt und parallel zur Gruppenausrichtungslinie (130-1) des ersten radial nach außen gerichteten Abschnitts liegt.

14. Verfahren nach Anspruch 10, 11 oder 12,
wobei eine Gruppenausrichtungslinie (130-1) des ersten radial nach außen gerichteten Abschnitts durch eine Mitte jedes Filmlochs des ersten radial nach außen gerichteten Abschnitts (90-1) definiert ist,
wobei eine Gruppenausrichtungslinie (140-1) des ersten radial nach innen gerichteten Abschnitts durch eine Mitte jedes Filmlochs des ersten radial nach innen gerichteten Abschnitts (92-1) definiert ist,
wobei eine Filmlochgruppenausrichtungslinie (150-1) der ersten Übergangsregion durch eine Mitte jedes Filmlochs der Filmlochgruppe (95-1) der ersten Übergangsregion definiert ist,
wobei die Gruppenausrichtungslinie (140-1) des ersten radial nach innen gerichteten Abschnitts parallel zur Gruppenausrichtungslinie (130-1) des ersten radial nach außen gerichteten Abschnitts liegt, und
wobei die Filmlochgruppenausrichtungslinie (150-1) der ersten Übergangsregion mit der Gruppenausrichtungslinie (130-1) des ersten radial nach außen gerichteten Abschnitts zusammenfällt und parallel zur Gruppenausrichtungslinie (140-1) des ersten radial nach innen gerichteten Abschnitts liegt.

## Revendications

1. Profil d'aube (100) pour un moteur à turbine à gaz comprenant un motif de trou de film en chevrons se chevauchant (52),
dans lequel le motif de trou de film en chevrons se chevauchant (52) comprend une première bande de film (55-1) comprenant :
une première partie orientée radialement vers l'extérieur (90-1) comprenant des trous de film orientés pour diriger l'air de refroidissement quittant les trous de film radialement vers l'extérieur d'un axe longitudinal central de moteur (X-X') et sur une surface du profil d'aube (100) ;
une première partie orientée radialement vers l'intérieur (92-1) comprenant des trous de film orientés pour diriger l'air de refroidissement quittant les trous de film radialement vers l'intérieur vers l'axe longitudinal central de moteur (X-X') et sur la surface du profil d'aube (100) ;
une première région de transition (110-1) comprenant une première région étant au moins l'une parmi équidistante des extrémités distales, centrée par rapport aux extrémités mésiales, ou chevauchant radialement les extrémités mésiales de la première partie orientée radialement vers l'extérieur (90-1) et de la première partie orientée radialement vers l'intérieur (92-1) ; et
un premier groupe de trous de film de région de transition (95-1) situé dans la première région de transition (110-1), dans lequel le premier groupe de trous de film de région de transition (95-1) comprend des trous de film orientés pour diriger l'air de refroidissement quittant les trous de film dans au moins une direction parmi radialement vers l'extérieur ou radialement vers l'intérieur par rapport à l'axe longitudinal central de moteur (X-X') et sur la surface du profil d'aube (100) ; et **caractérisé en ce que**
la première partie orientée radialement vers l'extérieur (90-1) est décalée par rapport à la première partie orientée radialement vers l'intérieur (92-1).

2. Profil d'aube selon la revendication 1, dans lequel le premier groupe de trous de film de région de transition (95-1) est colinéaire avec la première partie orientée radialement vers l'extérieur (90-1).

3. Profil d'aube selon la revendication 1,
dans lequel le premier groupe de trous de film de région de transition (95-1) est colinéaire avec la première partie orientée radialement vers l'intérieur (92-1).

4. Profil d'aube selon la revendication 1, dans lequel la première région de transition (110-1) comprend la première région équidistante des extrémités distales de la première partie orientée radialement vers l'extérieur (90-1) et de la première partie orientée radialement vers l'intérieur (92-1) ; et
le premier groupe de trous de film de région de transition (95-1) est colinéaire avec soit la première partie orientée radialement vers l'extérieur (90-1) soit la première partie orientée radialement vers l'intérieur (92-1) et situé dans la première région de transition (110), dans lequel le premier groupe de trous de film de région de transition (95-1) comprend des trous de film orientés pour diriger l'air de refroidissement quittant les trous de film dans au moins une direction parmi radialement vers l'extérieur ou radialement vers l'intérieur par rapport à l'axe longitudinal central de moteur (X-X') et sur la surface du profil d'aube (100).

5. Profil d'aube selon une quelconque revendication précédente,
dans lequel une première ligne d'alignement de groupe de parties orientées radialement vers l'extérieur (130-1) est définie à travers un centre de chaque trou de film de la première partie orientée radialement vers l'extérieur (90-1),
dans lequel une première ligne d'alignement de groupe de parties orientées radialement vers l'intérieur (140-1) est définie à travers un centre de chaque trou de film de la première partie orientée radialement vers l'intérieur (92-1),
dans lequel une première ligne d'alignement de groupe de trous de film de région de transition (150-1) est définie à travers un centre de chaque trou de film du premier groupe de trous de film de région de transition (95-1),
dans lequel la première ligne d'alignement de groupe de parties orientées radialement vers l'intérieur (140-1) est parallèle à la première ligne d'alignement de groupe de parties orientées radialement vers l'extérieur (130-1), et
dans lequel la première ligne d'alignement de groupe de trous de film de région de transition (150-1) coïncide avec la première ligne d'alignement de groupe de parties orientées radialement vers l'intérieur (140-1) et est parallèle à la première ligne d'alignement de groupe de parties orientées radialement vers l'extérieur (130-1).

6. Profil d'aube selon l'une quelconque des revendications 1 à 4,
dans lequel une première ligne d'alignement de groupe de parties orientées radialement vers l'extérieur (130-1) est définie à travers un centre de chaque trou de film de la première partie orientée radialement vers l'extérieur (90-1),
dans lequel une première ligne d'alignement de groupe de parties orientées radialement vers l'intérieur (140-1) est définie à travers un centre de chaque trou de film de la première partie orientée radialement vers l'intérieur (92-1),
dans lequel une première ligne d'alignement de groupe de trous de film de région de transition (150-1) est définie à travers un centre de chaque trou de film du premier groupe de trous de film de région de transition (95-1),
dans lequel la première ligne d'alignement de groupe de parties orientées radialement vers l'intérieur (140-1) est parallèle à la première ligne d'alignement de groupe de parties orientées radialement vers l'extérieur (130-1), et
dans lequel la première ligne d'alignement de groupe de trous de film de région de transition (150-1) coïncide avec la première ligne d'alignement de groupe de parties orientées radialement vers l'extérieur (130-1) et est parallèle à la première ligne d'alignement de groupe de parties orientées radialement vers l'intérieur (140-1).

7. Profil d'aube selon une quelconque revendication précédente, dans lequel le profil d'aube (100) comprend une aube de stator (60).

8. Profil d'aube selon l'une quelconque des revendications 1 à 6, dans lequel le profil d'aube (100) comprend une pale de rotor (70).

9. Profil d'aube selon une quelconque revendication précédente, dans lequel le motif de trou de film en chevrons se chevauchant (52) comprend une pluralité de bandes de film (55).

10. Procédé de fabrication d'un profil d'aube (100) pour un moteur à turbine à gaz ayant un motif de trou de film en chevrons se chevauchant (52) dans le profil d'aube (100) comprenant :
la fabrication d'une première partie orientée radialement vers l'extérieur (90-1) comprenant des trous de film orientés pour diriger l'air de refroidissement quittant les trous de film radialement vers l'extérieur d'un axe longitudinal central de moteur (X-X') et sur une surface du profil d'aube (100) ;
la fabrication d'une première partie orientée radialement vers l'intérieur (92-1) comprenant des trous de film orientés pour diriger l'air de refroidissement quittant les trous de film radialement vers l'intérieur vers l'axe longitudinal central de moteur (X-X') et sur la surface du profil d'aube (100) ; et
la fabrication d'un premier groupe de trous de film de région de transition (95-1) situé dans une première région de transition (110-1), dans lequel le premier groupe de trous de film de région de transition (95-1) comprend des trous de film orientés pour diriger l'air de refroidissement quittant les trous de film dans au moins une direction parmi radialement vers l'extérieur ou radialement vers l'intérieur par rapport à l'axe longitudinal central de moteur (X-X') et sur la surface du profil d'aube (100) ; et **caractérisé en ce que**
la première partie orientée radialement vers l'extérieur (90-1) est décalée par rapport à la première partie orientée radialement vers l'intérieur (92-1).

11. Procédé selon la revendication 10,
dans lequel le premier groupe de trous de film de région de transition (95-1) est colinéaire avec soit la première partie orientée radialement vers l'extérieur (90-1) soit la première partie orientée radialement vers l'intérieur (92-1), et
dans lequel la première région de transition (110-1) comprend une première région étant au moins l'une parmi équidistante des extrémités distales, centrée par rapport aux extrémités mésiales, ou chevauchant radialement les extrémités mésiales de la première partie orientée radialement vers l'extérieur (90-1) et de la première partie orientée radialement vers l'intérieur (92-1).

12. Procédé selon la revendication 10, dans lequel le premier groupe de trous de film de région de transition (95-1) est colinéaire avec soit la première partie orientée radialement vers l'extérieur (90-1) soit la première partie orientée radialement vers l'intérieur (92-1).

13. Procédé selon la revendication 10, 11 ou 12,
dans lequel une première ligne d'alignement de groupe de parties orientées radialement vers l'extérieur (130-1) est définie à travers un centre de chaque trou de film de la première partie orientée radialement vers l'extérieur (90-1),
dans lequel une première ligne d'alignement de groupe de parties orientées radialement vers l'intérieur (140-1) est définie à travers un centre de chaque trou de film de la première partie orientée radialement vers l'intérieur (92-1),
dans lequel une première ligne d'alignement de groupe de trous de film de région de transition (150-1) est définie à travers un centre de chaque trou de film du premier groupe de trous de film de région de transition (95-1),
dans lequel la première ligne d'alignement de groupe de parties orientées radialement vers l'intérieur (140-1) est parallèle à la première ligne d'alignement de groupe de parties orientées radialement vers l'extérieur (130-1), et
dans lequel la première ligne d'alignement de groupe de trous de film de région de transition (150-1) coïncide avec la première ligne d'alignement de groupe de parties orientées radialement vers l'intérieur (140-1) et est parallèle à la première ligne d'alignement de groupe de parties orientées radialement vers l'extérieur (130-1).

14. Procédé selon la revendication 10, 11 ou 12,
dans lequel une première ligne d'alignement de groupe de parties orientées radialement vers l'extérieur (130-1) est définie à travers un centre de chaque trou de film de la première partie orientée radialement vers l'extérieur (90-1),
dans lequel une première ligne d'alignement de groupe de parties orientées radialement vers l'intérieur (140-1) est définie à travers un centre de chaque trou de film de la première partie orientée radialement vers l'intérieur (92-1),
dans lequel une première ligne d'alignement de groupe de trous de film de région de transition (150-1) est définie à travers un centre de chaque trou de film du premier groupe de trous de film de région de transition (95-1),
dans lequel la première ligne d'alignement de groupe de parties orientées radialement vers l'intérieur (140-1) est parallèle à la première ligne d'alignement de groupe de parties orientées radialement vers l'extérieur (130-1), et
dans lequel la première ligne d'alignement de groupe de trous de film de région de transition (150-1) coïncide avec la première ligne d'alignement de groupe de parties orientées radialement vers l'extérieur (130-1) et est parallèle à la première ligne d'alignement de groupe de parties orientées radialement vers l'intérieur (140-1).
